# EUROPEAN PATENT SPECIFICATION

(11) **EP 3 566 821 B1**
(45) Date of publication and mention of the grant of the patent: **06.04.2022**
(21) Application number: 17889547.0
(22) Date of filing: 26.05.2017
(51) Int. Cl.: G05D 1/02, B25J 9/16

(54) **ROBOT MOVEMENT CONTROL METHOD, AND ROBOT**
VERFAHREN ZUR ROBOTERBEWEGUNGSSTEUERUNG UND ROBOTER
PROCÉDÉ DE COMMANDE DE DÉPLACEMENT DE ROBOT ET ROBOT

(30) Priority: 09.01.2017 CN 201710013906
(43) Date of publication of application: 13.11.2019
(73) Proprietor: Guangdong Bona Robot Corporation Limited, Shenzhen, Guangdong 518100 (CN)
(72) Inventor: LIU, Haoxin, Shenzhen Guangdong 518100 (CN); ZHOU, Xianwei, Shenzhen Guangdong 518100 (CN); YANG, Kai, Shenzhen Guangdong 518100 (CN); CAO, Yibo, Shenzhen Guangdong 518100 (CN)
(74) Representative: de Arpe Fernandez, Manuel
(86) International application number: PCT/CN2017/086187
(87) International publication number: WO 2018/126605

(56) References cited:
- CN-A- 102 890 507
- CN-A- 103 845 002
- CN-A- 105 538 309
- CN-A- 106 272 425
- CN-A- 106 695 790
- JP-A- 2005 032 196
- US-A1- 2010 235 033
- US-A1- 2016 001 701
- US-B2- 9 511 495
- QU DONGYUE ET AL: "The investigation of the obstacle avoidance for mobile robot based on polar coordinates vector method", 2013 IEEE INTERNATIONAL CONFERENCE ON MECHATRONICS AND AUTOMATION, IEEE, 4 August 2013 (2013-08-04), pages 1129-1134, XP032494238, DOI: 10.1109/ICMA.2013.6618073 ISBN: 978-1-4673-5557-5 [retrieved on 2013-10-02]
- ORDONEZ C ET AL: "The virtual wall approach to limit cycle avoidance for unmanned ground vehicles", ROBOTICS AND AUTONOMOUS SYSTEMS, ELSEVIER BV, AMSTERDAM, NL, vol. 56, no. 8, 31 August 2008 (2008-08-31), pages 645-657, XP022941057, ISSN: 0921-8890, DOI: 10.1016/J.ROBOT.2007.11.010 [retrieved on 2007-12-15]

## Description

### TECHNICAL FIELD

The present disclosure relates to the field of robots, and in particular to a method for controlling robot movements and a robot.

### BACKGROUND

As an intelligent device, a robot serves for human, and users of robots usually control robot movements when the robots are performing tasks. For example, a robot is performing a task within a certain area, then the robot may not be allowed to move out of the area until the task is finished. Currently in the art, the robot working area is limited by obstacle signals generated by a virtual wall generation device, or by a virtual obstacle boundary, which is in a pattern form and can be recognized by the robot.

However, when a robot is required to move across and cover a large area, users may need multiple virtual wall generation devices or patterns to divide the robot working area into multiple sub-regions, which increases cost.

Literature of "The investigation of the obstacle avoidance for mobile robot based on polar coordinates vector method" by Dongyue Qu et al. discloses obstacle avoidance and navigation of mobile robot by using polar coordinates vector method. Polar coordinates vector is used for detection and modeling of external environment and judgment of some complex conditions like obstacles merger or overlapping.

### SUMMARY OF THE DISCLOSURE

The present disclosure is to solve the problem that, in the art, virtual wall generation devices or patterns are required to generate virtual obstacle boundaries.

To solve the above-mentioned technical , a method according to claim 1 and/or a system according to claim 11 can be used.

Differentiating from the current skills available in the art, the present disclosure is to acquire position information of two adjacent obstacles located on two sides of a robot along the robot moving direction or a direction perpendicular to the moving direction, calculate distance between the two adjacent obstacles, and define a virtual obstacle boundary between the two adjacent obstacles when the distance between the two adjacent obstacles is less than or equal to a first preset distance. External virtual wall generation devices may not be required, defining virtual obstacle boundaries may be performed by the robot itself, which efficiently reduces cost.

The present disclosure is to solve the technical problem of how to control a moving path of a robot, enabling the robot to perform tasks of a large area.

### BRIEF DESCRIPTION OF DRAWINGS

FIG. 1 is a flow chart of one embodiment illustrating a method for controlling robot movement.
FIG. 2 is a virtual map for the robot controlled by the method shown in FIG. 1.
FIG. 3 illustrates that a virtual obstacle boundary is defined along a row direction by the method shown in FIG. 1, when the robot is moving along the row direction.
FIG. 4 illustrates that a virtual obstacle boundary is defined along a column direction by the method shown in FIG. 1, when the robot is moving along arrow direction.
FIG. 5 illustrates that a virtual obstacle boundary is defined along a row direction by the method shown in FIG. 1, when the robot is moving along a column direction.
FIG. 6 is the virtual obstacle boundary illustrated in FIG. 3.
FIG. 7 is the virtual obstacle boundary illustrated in FIG. 4.
FIG. 8 is the virtual obstacle boundary illustrated in FIG. 5.
FIG. 9 illustrates that two virtual obstacle boundaries defined along the row direction by the method shown in FIG. 1 are too close.
FIG. 10 illustrates that two virtual obstacle boundaries defined along the column direction by the method shown in FIG. 1 are too close.
FIG. 11 illustrates that the virtual obstacle boundary along the row direction and the virtual obstacle boundary along the column direction defined by the robot controlling method shown in FIG. 1 have an overlapping region.
FIG. 12 illustrates robot moving paths defined by the method shown in FIG. 1, when the robot is in a to-be-operated region, which has a single virtual obstacle boundary.
FIG. 13 illustrates a to-be-operated region with a plurality of virtual obstacle boundaries defined by the method shown in FIG. 1.
FIG. 14 illustrates a robot moving path in a to-be-operated region defined by a current method available in the related art.
FIG. 15 illustrates the robot controlled by the method in FIG. 1 detects communication between two sub-regions via an operated square and a to-be-operated square during the process of moving.
FIG. 16 is a structural view of a first implementation of the robot in the present disclosure.
FIG. 17 is a structural view of a second implementation of the robot in the present disclosure.

### DETAILED DESCRIPTION

Technical solutions of embodiments in the present disclosure are to be clearly and completely described referring to appended figures. Obviously, embodiments to be described are only a part but not all of the available embodiments for the present disclosure. Based on the embodiments in the present disclosure, any other embodiments made by ordinary skilled personnel in the art without creative endeavor should be within the scope of the present disclosure.

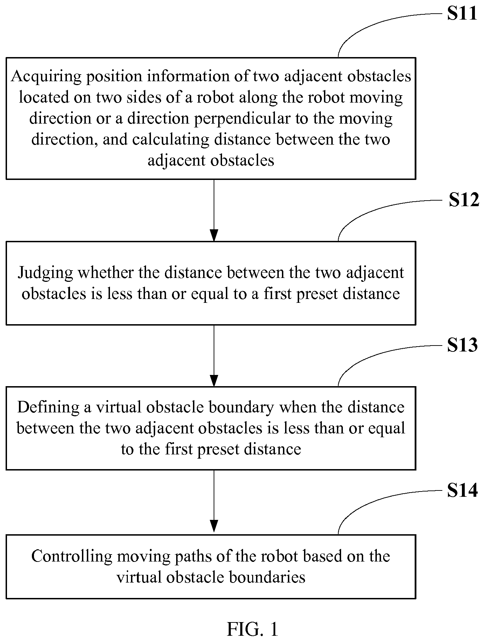

Referring to FIG. 1, a flow chart of an embodiment showing a method for controlling robot moving is provided. According to FIG. 1, the method for controlling the robot moving may include the following steps.

Step S11: position information of two adjacent obstacles located on two sides of a robot along the robot moving direction or a direction perpendicular to the moving direction may be acquired, and distance between the two adjacent obstacles may be calculated.

Before the step S11, the method may further include a step S101 as the following.

A virtual map of a to-be-operated region for the robot may be obtained, wherein the virtual map is divided into a plurality of squares in an array.

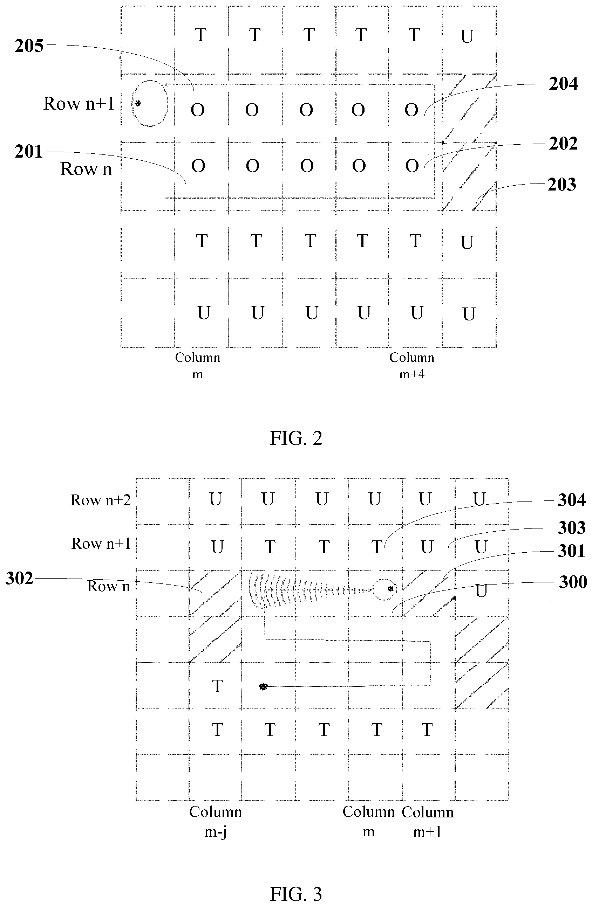

To be specific, referring to FIG. 2, in one embodiment, when the robot starts working, a virtual map of to-be-operated areas for the robot may be stored in a form of a plurality of squares in an array, wherein the robot may have at least one sensor, which has a detection range, and the robot may obtain status of each square within the detection range via the sensor and make marks on the virtual map accordingly, any square out of the detection range may be marked as unknown.

Step S102: during the process of robot moving, status of squares adjacent to the robot located square along the robot moving direction and the direction perpendicular to the moving direction may be detected, and the status of the squares may be marked on the virtual map, wherein squares that are passed by the robot may be marked as operated squares , squares that contain obstacles may be marked as obstacle squares , squares that are detected as obstacle free and never passed by the robot may be marked as to-be-operated squares , and squares that are never passed by the robot and the status thereof are not detected may be marked as unknown squares .

To be specific, in the above embodiment, the robot may have two modes of moving: row by row moving and column by column moving. Further referring to FIG. 2, row by row moving means that the robot may firstly move along a row direction, when encountering an obstacle, the robot may move to a next row along a column direction perpendicular to the row direction, and then move along the next row in a reversed direction with respect to the previous row direction. For example, in the virtual map, the robot may firstly move from position 201, which is located at row n of column m, to position 202, which is located at row n of column m+4. As an obstacle is at position 203, which is located at row n of column m+5, the robot may move along a column direction perpendicular to the row direction, from the position 202 at row n of column m+4 to position 204 located at row n+1 of column m+4, and then continue moving along row n+1 from the position 204 at row n+1 of column m+4 to position 205 located at row n+1 of column m. Column by column moving means that the robot may firstly move long a column direction, when encountering an obstacle, the robot may move to a next column along a row direction perpendicular to the column direction, and then move along the next column in a reversed direction with respect to the previous column direction.

In the example of row by row moving mode, during the moving process, status of the squares adjacent to the robot located square along the moving direction (row direction) and the perpendicular direction (column direction) may be detected and marked on the virtual map. The status of the squares may be updated while the robot moving. As shown in FIG. 2, the squares that are passed by the robot and the square , which the robot is located at, may be marked as operated squares shown with a letter "O" in FIG. 2; the squares , which are detected as containing obstacles, may be marked as obstacle squares , which are shown as crossed in FIG. 2; the squares , which are detected as obstacle free and have not been passed by the robot, may be marked as to-be-operated squares shown with a letter "T" in FIG. 2; the squares , which have not been passed by the robot and the status thereof have not be detected, may be marked as unknown and shown with a letter "U" in FIG. 2.

In other embodiments, the robot may move along other directions, and the virtual map may be stored by other means, which will not be limited herein.

Further, the step S11 may include a step S111.

Two adjacent obstacle squares located on two sides of the robot along the moving direction or the direction perpendicular to the moving direction may be acquired, and distance between the two adjacent obstacle squares based on the position information of the two adjacent obstacle squares on the virtual map may be calculated.

The step S111 may further include a step S1111 as the following.

Along the moving direction of the robot or a direction perpendicular to the robot moving direction, position information of a first obstacle located on one side of the robot and a second obstacle located on another side of the robot may be acquired, wherein a region between the first and the second obstacles may be obstacle free.

To be specific, in one embodiment, as shown in FIG. 3, when the robot is moving along a row direction on row n, position information of two adjacent obstacle squares , which contain the first and the second obstacles, are acquired, which is the position information of the position 301 at row n of column m+1 and the position 302 at row n of column m-j on the virtual map, so that distance between the two adjacent obstacle squares may be calculated as j+1 squares . In other embodiments, position information of the first and the second obstacles may be acquired along a direction perpendicular to the robot moving direction, which will not be limited herein.

Step S12: it may be determined whether the distance between two adjacent obstacles is equal to or less than a first preset distance.

To be specific, the robot may preset a first threshold distance as the first preset distance. In the above embodiment, the first preset distance may be expressed in squares as unit, wherein a specific value may be determined based on actual demand, which will not be limited herein.

The step S12 may further include a step S121 as the following.

It is determined whether a to-be-operated square is located on at least one side of a square between the two adjacent obstacle squares and whether the to-be-operated square communicates with an unknown square .

To be specific, in the above embodiment, as shown in FIG. 3, the robot is located at position 300 at row n of column m of the virtual map, position 301 at row n of column m+1 and position 302 at row n of column m-j are both obstacle squares . When a to-be-operated square is located on one side (row n+1) of the squares between the two obstacle squares , and the to-be-operated square communicates with an unknown square , for example, a to-be-operated square 304 at row n+1 of column m is located next to and communicates with the unknown square 303 (row n+1 of column m+1), then a virtual obstacle boundary may be defined while the robot is moving from the operated region to the to-be-operated region.

Step S13: When the distance between the two adjacent obstacles is equal to or less than the first preset distance, a virtual obstacle boundary may be defined between the two adjacent obstacles.

Further, the step S13 may include a step S131.

A virtual obstacle boundary between the two adjacent obstacle squares may be defined, when the distance between the two adjacent obstacle squares is equal to or less than the first preset distance, and a to-be-operated square is located on at least one side of the square between the two adjacent obstacle squares and communicates with an unknown square .

To be specific, in the above embodiment, as shown in FIG. 3, when the distance between the two adjacent obstacle squares 301 and 302 (wherein the distance is equal to j+1 squares ) is less than or equal to a first preset distance (for example, 10 squares ), and a to-be-operated square is located on at least one side of the squares between the two adjacent obstacle squares 301 and 302 and communicates with an unknown square , for example, when a to-be-operated square 304 is located next to and communicates with the unknown square 303, then a virtual obstacle boundary may be defined between the two adjacent obstacle squares 301 and 302.

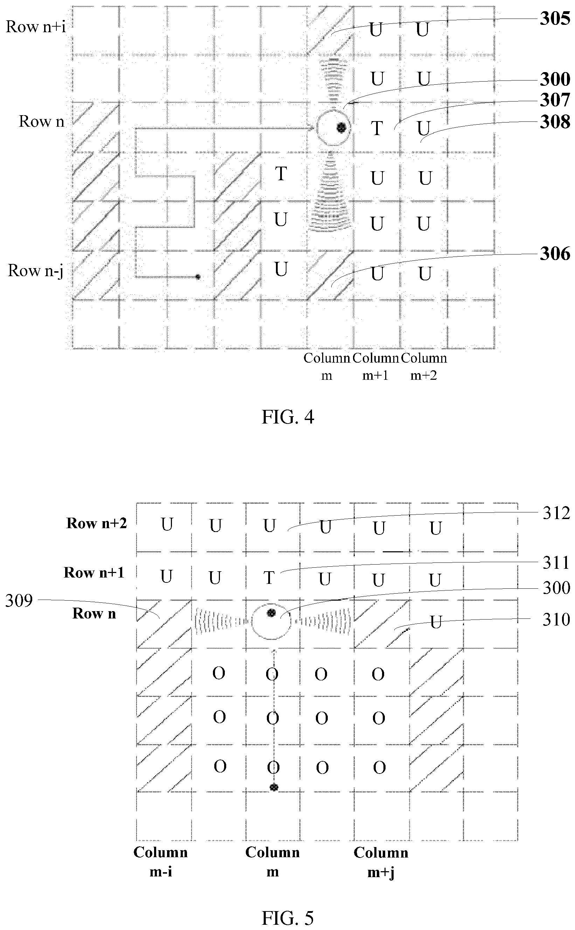

In another embodiment, referring to FIG. 4, the robot may move along the row direction on the virtual map and may be located at position 300 at row n of column m at the moment, when the distance between the two adjacent obstacle 305 and 306 (i+j squares ), which are located on two opposite sides of the robot, is less than or equal to the first preset distance (for example, 10 squares ), and a to-be-operated square is located on at least one side of the square between the two adjacent obstacle squares 305 and 306 and communicates with an unknown square , for example, a to-be-operated square may be located at position 307, which is next to and communicates with an unknown square 308 at row n of column m+2, then a virtual obstacle boundary between the two adjacent obstacle squares 305 and 306 may be defined.

Referring to FIG. 5, the robot may be moving along a column direction on the virtual map, and located at position 300 at row n of column m at the moment, when distance between two adjacent obstacle squares 309 and 310 (wherein the distance is equal to i+j squares ), which are located on two sides of the robot, is less than or equal to a first preset distance (for example, 10 squares ), and a to-be-operated square is located on at least one side of the square between the two adjacent obstacle squares 309 and 310 and communicates with an unknown square , for example, a to-be-operated square located at position 311, which is next to and communicates with an unknown square 312 at row n+2 of column m, then a virtual obstacle boundary may be defined between the two adjacent obstacle squares 309 and 310.

Step S132 may be performed as: controlling the robot to continue moving till the robot moves out of squares between the two adjacent obstacle squares , and defining a virtual obstacle boundary between the two adjacent obstacle squares.

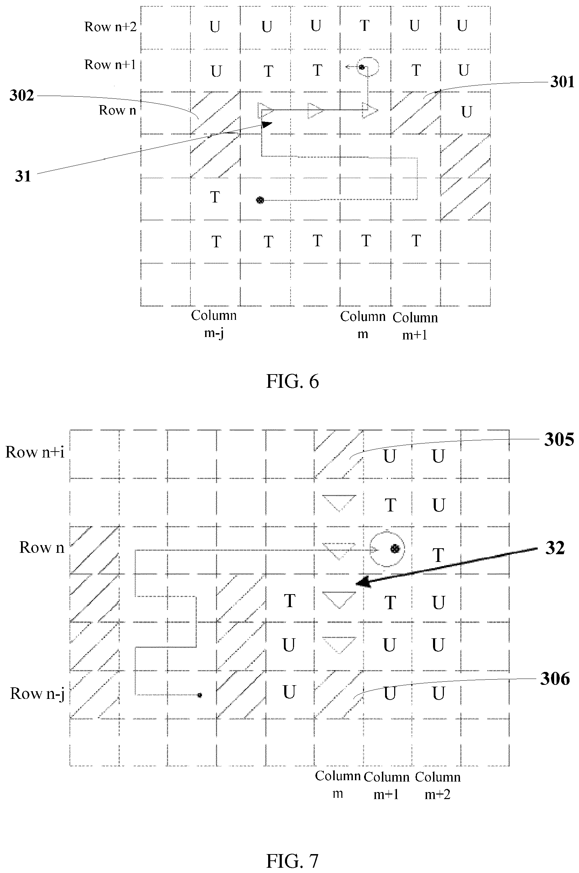

To be specific, referring to FIG. 3 and FIG. 6, when the robot moves along the column direction reaching the next row (i.e. row n+1), the robot may have moved out of the squares between two adjacent obstacle squares 301 and 302, then a virtual obstacle boundary 31 may be defined between the two adjacent obstacles 301 and 302, meaning that the virtual obstacle boundary 31 may be effective, and the squares may be marked with "▷" as shown in FIG. 6.

Referring to FIG. 4 and FIG. 7, when the robot moves along the row direction reaching the next column (column m+1), the robot may have moved out of the squares between two adjacent obstacles 305 and 306, a virtual obstacle boundary 32 may be defined between the two adjacent obstacles 305 and 306, meaning that the virtual obstacle boundary 32 may be effective, and the squares may be marked with "▷" as shown in FIG. 7.

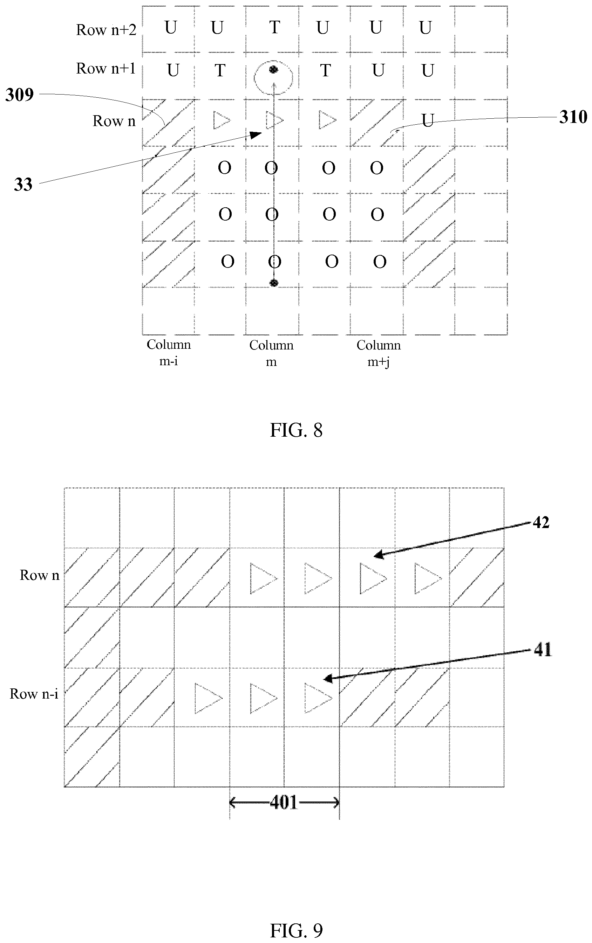

Referring to FIG. 5 and FIG. 8, when the robot moves along the column direction reaching the next row (row n+1),the robot may have moved out of the squares between two adjacent obstacles 309 and 310, a virtual obstacle boundary 33 may be defined between the two adjacent obstacles 309 and 310, meaning that the virtual obstacle boundary 33 may be effective, and the squares may be marked with "▷" as shown in FIG. 8.

The step S13 may further include a step S133 as the following.

When the virtual map has more than two virtual obstacle boundaries, it may be determined whether distance between the more than two virtual obstacle boundaries along a first direction and a second direction, which is perpendicular the first direction, either of which is less than a second preset distance, and whether projections of the two boundaries along the direction other than the one for calculating the distance have an overlapping area.

The second preset distance is a second threshold distance defined by the robot, which may depend on the actual demand, and will not be limited herein. In one embodiment, a first direction on the virtual map is the row direction, and a second direction on the virtual map is the column direction. It may be determined whether the distance between two virtual obstacle boundaries along any one of the directions, either the row direction or the column direction, is less than the second preset distance, and whether the projections of the virtual boundaries along the direction other than the one used for calculating the boundary distance have an overlapping area, so that it may be determined whether the two virtual obstacle boundaries are defined too close.

Step S134: when the distance between two virtual obstacle boundaries is less than the second preset distance, and has an overlapping projection area, then one of the boundaries may be selected to be deleted.

To be specific, in one embodiment, referring to FIG. 9, on a virtual map, distance between two adjacent virtual obstacle boundaries 41 and 42 along the row direction (i squares ) may be less than a second preset distance (for example, 5 squares ), and the virtual obstacle boundaries 41 and 42 have an overlapping projection area 401 along the column direction, indicating the two adjacent virtual obstacle boundaries 41 and 42 may be too close, any one of the boundaries may be selected to be deleted.

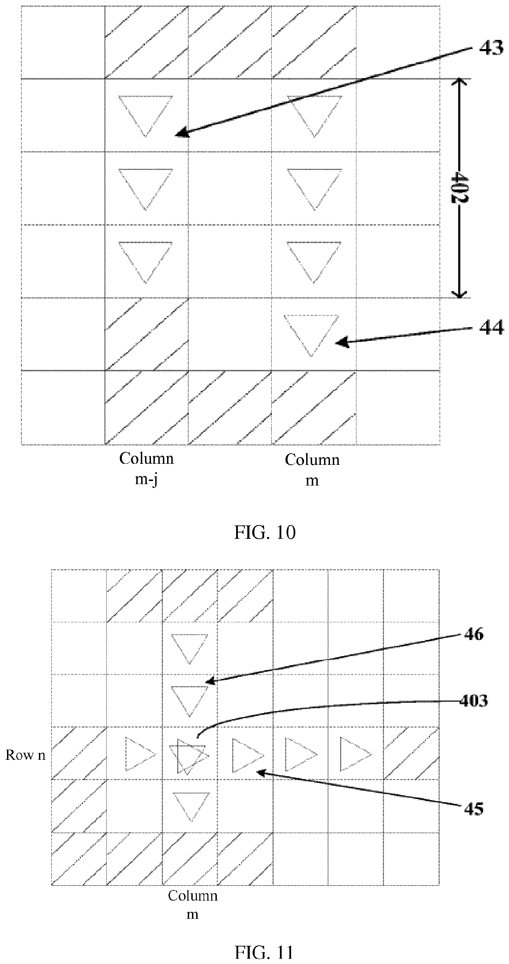

Referring to FIG. 10, on a virtual map, distance between two adjacent virtual obstacle boundaries 43 and 44 along the column direction (j squares ) may be less than a second preset distance (for example, 5 squares ), and the virtual obstacle boundaries 43 and 44 have an overlapping projection area 402 along the row direction, indicating that the two adjacent virtual obstacle boundaries 43 and 44 may be too close, and any one of the boundaries may be selected to be deleted.

Referring to FIG. 11, on a virtual map, distance between a virtual obstacle boundary 45 along the row direction and a virtual obstacle boundary 46 along the column direction may be defined as 0, which is less than a second preset distance (for example, 5 squares ), and the virtual obstacle boundaries 45 and 46 have an overlapping area 403, indicating that the two virtual obstacle boundaries 45 and 46 may be too close, and any one of the two boundaries may be selected to be deleted.

Further, the step S134 may include the following operations.

Step S1341: the virtual obstacle boundary, which is defined at a later time, may be deleted.

To be specific, in the above embodiment, referring to FIG. 9, the virtual obstacle boundary 42 may be defined later than the virtual obstacle boundary 41, then the virtual obstacle boundary 42 may be deleted. Referring to FIG. 10, the virtual obstacle boundary 44 may be defined later than the virtual obstacle boundary 43, then the virtual obstacle boundary 44 may be deleted. Referring to FIG. 11, the virtual obstacle boundary 46 may be defined later than the virtual obstacle boundary 45, then the virtual obstacle boundary 46 may be deleted.

Step S14: the robot moving paths may be controlled by virtual obstacle boundaries.

The step S14 may include the following operation.

S141: the robot may be controlled to move by defining obstacles at virtual obstacle boundaries, when the robot moves to reach virtual obstacle boundaries.

To be specific, after a virtual obstacle boundary is effective, the robot may treat the position of which a virtual obstacle boundary is located as containing an obstacle. During the subsequent moving process, the robot may not be able to cross squares , which are located at the virtual obstacle boundary, until the virtual obstacle boundary is deleted.

Further, the step S141 may include the following operations.

Step S1411: the to-be-operated region may be divided into at least two sub-regions using the virtual obstacle boundary.

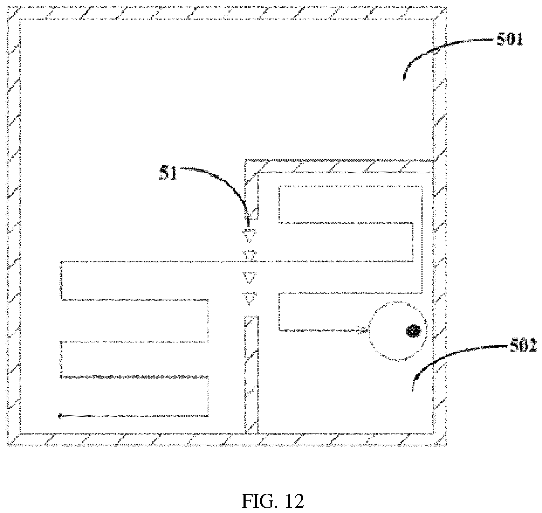

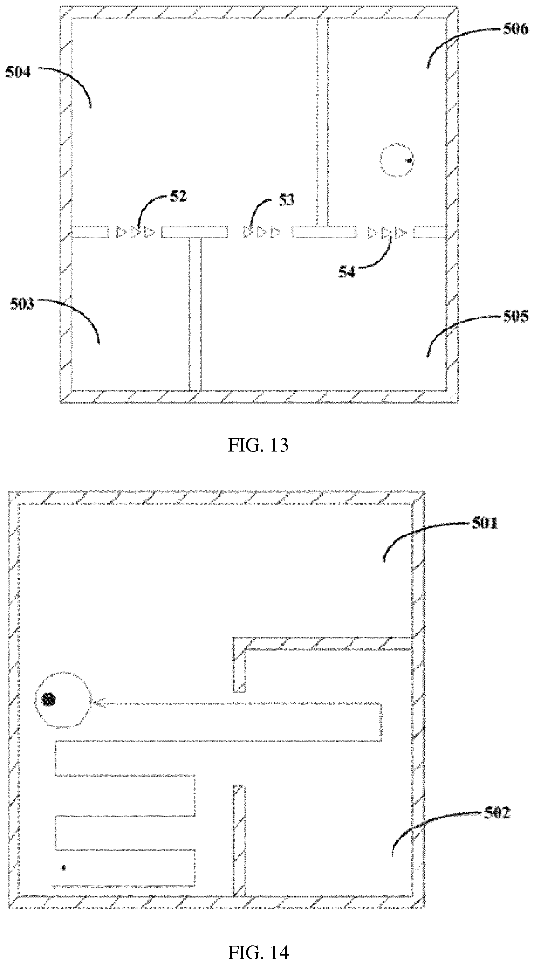

To be specific, referring to FIG. 12, a virtual obstacle boundary 51 may divide a to-be-operated region into two sub-regions 501 and 502. Referring to FIG. 13, virtual obstacle boundaries 52, 53, and 54 may divide a to-be-operated region into 4 sub-regions 503, 504, 505, and 506.

Step S1412: After the robot is controlled to traverse to-be-operated squares and unknown squares of a sub-region, the virtual obstacle boundaries may be deleted, the robot may then start traversing to-be-operated squares and unknown squares of another sub-region.

To be specific, referring to FIG. 12, the robot may move row by row, during the process of moving from a sub-region 501 to a sub-region 502, a virtual obstacle boundary 51 may be defined between the sub-region 501 and the sub-region 502, wherein the method for defining the boundary may refer to the step S11 to the step S13, which will not be repeatedly described. After the virtual obstacle boundary 51 becomes effective, the robot may treat the position of which the virtual obstacle boundary 51 is located as containing obstacles. During the subsequent moving process, the robot may not be able to move from the sub-region 502 to the sub-region 501 by crossing the virtual obstacle boundary 51, until the virtual obstacle boundary 51 is deleted. Therefore, the robot may firstly traverse to-be-operated squares and unknown squares within the sub-region 502, then the virtual obstacle boundary 51 may be deleted, and at the same time, the position of which the virtual obstacle boundary 51 is located may not contain obstacles, the robot may then move from the sub-region 502 to the sub-region 501 and continue traversing to-be-operated squares and unknown squares within the sub-region 501.

Referring to FIG. 13, the robot may define virtual obstacle boundaries 52, 53, and 54, successively, to divide a to-be-operated region into four sub-regions 503, 504, 505, and 506. During the subsequent moving process, the robot may firstly traverse to-be-operated squares and unknown squares within the sub-region 506, and then delete the virtual obstacle boundary 54, which is defined latest, at the same time, the position at which the virtual obstacle boundary 54 is located may not contain obstacles, the robot may then move from the sub-region 506 to the sub-region 505, and continue traversing to-be-operated squares and unknown squares within the sub-region 505. After traversing, the robot may successively delete the virtual obstacle boundaries 53 and 52, and successively traverse to-be-operated squares and unknown squares within the sub-region 504 and the sub-region 503.

Referring to FIG. 14, with available technologies in the art, during the moving process from the sub-region 501 to the sub-region 502, a virtual obstacle boundary may not be defined, when the robot moves subsequently, the robot may return from the sub-region 502 to the sub-region 501 without traversing to-be-operated squares and unknown squares within the sub-region 502, so that, after to-be-operated squares and unknown squares in the sub-region 501 are traversed, the robot may need to return to the sub-region 502 to work repeatedly, which has low work efficiency and consumes more time.

In contrast with the available technologies in the art as shown in FIG. 14, the method for controlling robot moving as described in the present disclosure may define virtual obstacle boundaries to divide to-be-operated regions into at least two sub-regions, control the robot to firstly finish traversing to-be-operated squares and unknown squares within one of the sub-regions, and then traverse to-be-operated squares and unknown squares of another sub-regions, which may improve the robot working efficiency and save working time.

Step S1413: during the process of moving, when the robot discovers a square , which communicates with an operated square and/or a to-be-operated square , which are located in at least two sub-regions, the virtual obstacle boundary may be deleted.

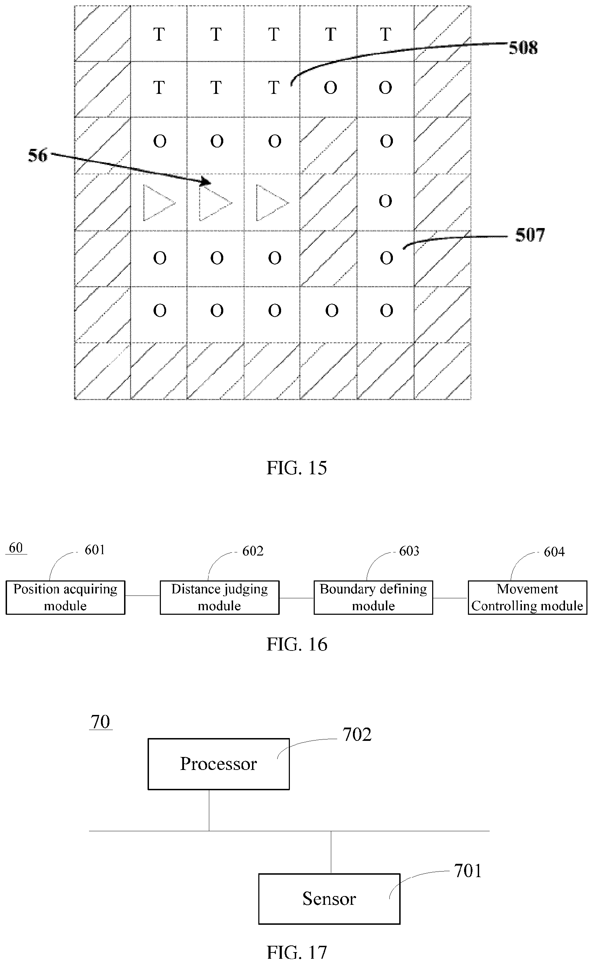

To be specific, it may be seen from steps S11 to S13, a virtual obstacle boundary may be defined while the robot is moving from an operated region to an non-operated region, which means when a virtual obstacle boundary is defined initially, sub-regions located on two sides of the virtual obstacle boundary cannot communicate through operated and/or to-be-operated squares . However, during the robot moving process, status of squares may change, and, referring to FIG. 15, two sub-regions 507 and 508 may communicate through operated and/or to-be-operated squares . At the same time, the virtual obstacle boundary 56 may become ineffective and be deleted by the robot, saving storage space for the robot.

In the above embodiments, by acquiring position information of two adjacent obstacles located on two sides of the robot along the robot moving direction or the direction perpendicular to the moving direction, and calculating distance between the two adjacent obstacles, when the distance between the two adjacent obstacles is less than or equal to a first preset distance, a virtual obstacle boundary may be defined, and moving paths of the robot may be controlled dependent on the virtual obstacle boundary, which may not require an external virtual wall generator, virtual obstacle boundaries may be defined by the robot itself, saving cost efficiently. Also, the defined virtual obstacle boundaries may divide a to-be-operated region into at least two sub-regions, so that after completion of traversing to-be-operated squares and unknown squares within one of the sub-regions, the robot may start traversing to-be-operated squares and unknown squares within another sub-region, which effectively improves the robot working efficiency and saves working time.

Referring to FIG. 16, a structural view of a first implementation of the robot is shown. As shown in FIG. 16, a robot 60 of the present disclosure may include: a position acquiring module 601, a distance determination module 602, a boundary defining module 603, and a moving control module 604, connected in such order.

The robot 60 may be a floor sweeping robot and other types of robots, which should not be limited herein.

The position acquiring module 601 may acquire position information of two adjacent obstacles located on two sides of the robot 60 along the robot 60 moving direction or a direction perpendicular the moving direction, and calculate distance between the two adjacent obstacles.

To be specific, in one embodiment, the robot 60 may acquire position information of two adjacent obstacles located on two sides of the robot 60 along the robot 60 moving direction or the direction perpendicular the moving direction via a sensor, and calculate distance between the two adjacent obstacles, wherein the distance is transferred to the distance determination module 602.

The distance determination module 602 may be used to determine whether the distance between the two adjacent obstacles is less than or equal to a first preset distance.

To be specific, the first preset distance may be a first threshold distance preset by the robot, values may be determined dependent on actual demand, which will be not be limited herein. The distance determination module 602 may receive the distance between the two adjacent obstacles transferred from the position acquiring module 601, determine whether the distance is less than or equal to the first preset distance, and transfer the determined results to the boundary defining module 603.

The boundary defining module 603 may be used to define a virtual obstacle boundary between the two adjacent obstacles, when the distance between the two adjacent obstacles is less than or equal to the first preset distance.

To be specific, the boundary defining module 603 may receive the determined results from the distance determination module 602, when the result shows the distance is less than or equal to the first preset distance, the robot 60 may define a virtual obstacle boundary between the two adjacent obstacles by using the boundary defining module 603.

The moving control module 604 may be used to control moving paths of the robot depending on the virtual obstacle boundaries.

To be specific, in one embodiment, after a virtual obstacle boundary is defined, during the subsequent moving process, the robot 60 may determine that an obstacle is located at the position of which the virtual obstacle boundary is defined, and the robot cannot cross the virtual obstacle boundary, so that the moving paths of the robot may be controlled.

In the above embodiment, the robot may acquire position information of the two adjacent obstacles located on the two sides of the robot along the robot moving direction or the direction perpendicular to the moving direction, and calculate distance between the two adjacent obstacles, when the distance between the two adjacent obstacles is less than or equal to a first preset distance, a virtual obstacle boundary may be defined, and moving paths of the robot may be controlled dependent on the virtual obstacle boundary, which may not require an external virtual wall generator, virtual obstacle boundaries may be defined by the robot itself, saving cost efficiently.

Referring to FIG. 17, a structural view of a second implementation of the robot is shown. As shown in FIG. 17, a robot 70 of the present disclosure may include: a sensor 701 and a processor 702, which connect with each other through a bus.

The robot 60 may be a floor sweeping robot and other types of robots, which will not be limited herein.

The sensor 701 may be used acquire position information of two adjacent obstacles located on two sides of the robot along the robot moving direction or a direction perpendicular to the moving direction.

To be specific, the sensor 701 may be a distance sensor module. The robot 70 may acquire position information of the two adjacent obstacles located on the two sides of the robot 70 along the robot moving direction or the direction perpendicular to the moving direction via the sensor 701. The sensor 701 may also be a sensor of other types, as long as the position information of the two adjacent obstacles located on two sides of the robot can be acquired, the type of the sensor will not be limited herein.

The processor 702 may control the robot to move, wherein the processor 702 may also be called as a central processing unit (CPU). The processor 702 may be an integrated circuit chip, being capable of processing data. The processor 702 may also be a general processor, a digital signal processor (DSP), an application-specific integrated circuit (ASIC), a field programmable gate array (FPGA) or other programmable logic devices, discrete component gate or transistor logic devices, discrete hardware assembly. The general processor may be a microprocessor or any regular processor and the like.

The robot 70 may further include a non-transitory memory (not shown in the figure), which may store necessary instructions and data for the processor 702 to operate, for example, the position information of the two adjacent obstacles located on two sides of the robot 70 and position information of where virtual obstacle boundaries are defined, and the like.

The processor 702 may be used to calculate distance between two adjacent obstacles and determine whether the distance is less than or equal to a first preset distance. When the distance between the two adjacent obstacles is less than or equal to the first preset distance, a virtual obstacle boundary may be defined between the two adjacent obstacles, and moving paths of the robot may be controlled depending on the virtual obstacle boundaries.

The first preset distance is a first distance threshold defined by the robot 70, the value of the first distance threshold may be defined depending on specific demand, which will not be limited herein.

To be specific, in one embodiment, the processor 702 may receive the position information of the two adjacent obstacles located on two sides of the robot 70 acquired by the sensor 701, calculate distance between the two adjacent obstacles, and determine whether the distance is less than or equal to the first preset distance. When the distance is less than or equal to the first preset distance, a virtual obstacle boundary may be defined between the two adjacent obstacles. Then, the processor 702 may control the robot 70 to not cross the virtual obstacle boundary by defining obstacles at the virtual obstacle boundary, so that moving paths of the robot 70 is controlled. Of course, in other embodiments, the processor 702 may execute other steps of an implementation of the robot moving control method as described in the present disclosure, which will not be limited herein.

## Claims

1. A method for controlling robot movement on a to-be-operated region, the to-be-operated region being subdivided into squares, comprising:
acquiring (S11) position information of two adjacent obstacles located on two sides of a robot along a moving direction of the robot or a direction perpendicular to the moving direction, and calculating distance between the two adjacent obstacles;
determining (S12) whether the distance between the two adjacent obstacles is less than or equal to a first preset distance;
defining (S13) a virtual obstacle boundary between the two adjacent obstacles when the distance between the two adjacent obstacles is less than or equal to the first preset distance; and
controlling (S14) moving paths of the robot based on the virtual obstacle boundary,
wherein the controlling (S14) moving paths of the robot based on the virtual obstacle boundary comprises:
dividing the to-be-operated region into at least two sub-regions using the virtual obstacle boundary ; and
controlling the robot to traverse to-be-operated squares and unknown squares within one of the at least two sub-regions, then deleting the virtual obstacle boundary, and controlling the robot to traverse the to-be-operated squares and the unknown squares of another one of the at least two sub-regions,
wherein a square, which is detected to be obstacle free and is not passed by the robot, is marked as a to-be-operated square, and a square, which is not passed by the robot and status of which is not detected, is marked as an unknown square.

2. The method according to claim 1, wherein the acquiring (S11) position information of the two adjacent obstacles located on the two sides of the robot along the robot moving direction or the direction perpendicular to the moving direction comprises:
along the robot moving direction or the direction perpendicular to the moving direction, acquiring position information of a first obstacle located on one side of the robot and position information of a second obstacle located on another side of the robot, wherein regions between the first and the second obstacle is obstacle free.

3. The method according to claim 1, wherein the controlling (S14) moving paths of the robot based on the virtual obstacle boundary comprises:
when the robot subsequently moves to reach the virtual obstacle boundary, defining a virtual obstacle to be located at the virtual obstacle boundary, and controlling the moving paths of the robot to not cross the virtual obstacle boundary until the virtual obstacle boundary is deleted.

4. The method according to claim 3, wherein the defining (S13) the virtual obstacle boundary between the two adjacent obstacles when the distance between the two adjacent obstacles is less than or equal to the first preset distance comprises:
controlling the robot to continue moving so that the robot moves out of squares between the two adjacent obstacles, and then the virtual obstacle boundary is defined between the two adjacent obstacles.

5. The method according claim 3, wherein the defining (S13) the virtual obstacle boundary between the two adjacent obstacles when the distance between the two adjacent obstacles is less than or equal to the first preset distance further comprises:
when more than two virtual obstacle boundaries are defined, determining whether distance between the two virtual obstacle boundaries along any one of a first direction and a second direction perpendicular to the first direction is less than a second preset distance, and whether projections of the boundaries along a direction other than the direction used for calculating the distance have an overlapping area;
when the distance is less than the second preset distance, and when there is an overlapping area, any one of the more than two virtual obstacle boundaries is selected to be deleted.

6. The method according to claim 5, wherein, when the distance between the two virtual obstacle boundaries is less than the second preset distance, and when there is an overlapping area, selecting any one of the more than two virtual obstacle boundaries to delete comprises:
deleting a virtual obstacle boundary, which is defined at a later time.

7. The method according claim 6, wherein controlling (S14) moving paths of the robot based on the virtual obstacle boundary further comprises:
during the process of moving, when an operated square and/or the to-be-operated square is detected to communicate with at least two sub-regions, deleting the virtual obstacle boundary, wherein a square, which is passed by the robot, is marked as an operated square.

8. The method according to claim 1, wherein, before the acquiring (S11) position information of the two adjacent obstacles located on the two sides of the robot along the robot moving direction or the direction perpendicular to the moving direction and calculating the distance between the two adjacent obstacles, the method further comprises:
acquiring a virtual map of a to-be-operated region for the robot, wherein the virtual map is divided into the squares in an array; and
during a process of the robot moving, along the moving direction and the direction perpendicular to the moving direction, detecting status of squares, which are adjacent to the robot located square, and marking the status of the squares on the virtual map, wherein a square, which is detected to have an obstacle, is marked as an obstacle square.

9. The method according to claim 8, wherein the acquiring (S11) position information of the two adjacent obstacles located on the two sides of the robot along the robot moving direction or the direction perpendicular to the moving direction and calculating the distance between the two adjacent obstacles comprises:
along the moving direction or the direction perpendicular to the moving direction, acquiring the two adjacent obstacle squares located on two sides of the robot, and calculating the distance between the two adjacent obstacle squares based on position information of the two adjacent obstacle squares on the virtual map.

10. The method according to claim 9, wherein
the determining (S12) whether the distance between the two adjacent obstacles is less than or equal to the first preset distance further comprises determining whether the to-be-operated square is located adjacent to at least one side of a square between the two adjacent squares and communicates with the unknown square;
the defining (13) the virtual obstacle boundary between the two adjacent obstacles, when the distance between the two adjacent obstacles is less than or equal to the first preset distance, comprises:
when the distance between the two adjacent obstacle square is less than or equal to the first preset distance, and the to-be-operated square is located adjacent to at least one side of a square between the two adjacent squares and communicates with the unknown square, the virtual obstacle boundary is defined between the two adjacent obstacle boundary.

11. A robot, comprising:
a sensor (701); and
a processor (702) connected with the sensor (701), wherein
the sensor (701) and the processor (702)are configured to execute one or more programs including instructions for performing the method for any of claims of 1-10.

## Patentansprüche

1. Eine Methode für die Steuerung von Roboterbewegungen in einem zu bedienenden Bereich, wobei der zu bedienende Bereich in Felder aufgeteilt ist, Methode die Folgendes umfasst:
Erhalt (S11) von Positionsinformation von zwei benachbarten Hindernissen, die an zwei Seiten eines Roboters längs einer Bewegungsrichtung des Roboters oder einer Richtung senkrecht zur Bewegungsrichtung lokalisiert sind, und Berechnung der Distanz zwischen den zwei benachbarten Hindernissen;
Bestimmung (12), ob die Distanz zwischen den beiden benachbarten Hindernissen geringer ist oder gleich einer ersten vorgegebenen Distanz;
Definierung (S13) einer virtuellen Hindernisgrenze zwischen den beiden benachbarten Hindernissen, wenn die Distanz zwischen den beiden benachbarten Hinternissen geringer ist oder gleich der ersten vorgegebenen Distanz; und
Steuerung (S14) von Bewegungsbahnen des Roboters basierend auf der virtuellen Hindernisgrenze,
wobei die Steuerung (S14) von Bewegungsbahnen des Roboters basierend auf der virtuellen Hindernisgrenze Folgendes umfasst:
Aufteilung des zu bedienenden Bereichs in mindestens zwei Unterbereiche unter Nutzung der virtuellen Hindernisgrenze; und
Steuerung des Roboters zum Durchqueren der zu bedienenden Felder und von unbekannten Feldern in mindestens einem der mindestens zwei Unterbereiche, dann Löschen der virtuellen Hindernisgrenze und Steuerung des Roboters, um die zu bedienenden Felder und die unbekannten Felder von einem anderen der mindestens zwei Unterbereiche zu durchqueren,
wobei ein Feld, was als frei von Hindernissen ermittelt wird und das vom Roboter nicht durchquert wird, als ein zu bedienendes Feld gekennzeichnet wird; und ein Feld, das nicht vom Roboter durchquert wird und dessen Zustand nicht ermittelt ist, als ein unbekanntes Feld gekennzeichnet wird.

2. Die Methode gemäss Anspruch 1, bei der der Erhalt (S11) von Positionsinformation der beiden benachbarten Hindernisse, die an den beiden Seiten des Roboters längs der Bewegungsrichtung des Roboters oder in der Richtung senkrecht zu der Bewegungsrichtung lokalisiert sind, Folgendes umfasst:
längs der Bewegungsrichtung des Roboters oder in der Richtung senkrecht zu der Bewegungsrichtung Erhalt von Positionsinformation des ersten an einer Seite des Roboters lokalisierten Hindernisses und Positionsinformation eines zweiten an einer anderen Seite des Roboters lokalisierten Hindernisses, wobei die Bereiche zwischen dem ersten und dem zweiten Hinterniss frei sind von Hindernissen.

3. Die Methode gemäss Anspruch 1, bei der die Steuerung (S14) der Bewegungsbahnen des Roboters basierend auf der virtuellen Hindernisgrenze Folgendes umfasst:
Wenn sich der Roboter darauf folgend bewegt, um die virtuelle Hindernisgrenze zu erreichen, Definierung eines virtuellen Hindernisses, das an der virtuellen Hindernisgrenze lokalisiert sein muss, und Steuerung der Bewegungsbahn des Roboters, um nicht die virtuelle Hindernisgrenze zu überschreiten bis die virtuelle Hindernisgrenze gelöscht ist.

4. Die Methode gemäss Anspruch 3, bei der die Definierung (S13) der virtuellen Hindernisgrenze zwischen den beiden benachbarten Hindernissen Folgendes umfasst, wenn die Distanz zwischen den beiden benachbarten Hindernissen geringer ist oder gleich der ersten vorgegebenen Distanz:
Steuerung des Roboters zwecks Weiterbewegung, so dass der Roboter sich ausserhalb des Feldes zwischen den beiden benachbarten Hindernissen bewegt, und danach Definierung der virtuellen Hindernisgrenze zwischen den beiden benachbarten Hindernissen.

5. Die Methode gemäss Anspruch 3, bei der die Definierung (S13) der virtuellen Hindernisgrenze zwischen den beiden benachbarten Hindernissen weiter Folgendes umfasst, wenn die Distanz zwischen den beiden benachbarten Hindernissen geringer ist oder gleich der ersten vorgegebenen Distanz:
Wenn mehr als zwei virtuelle Hindernisgrenzen definiert sind, Bestimmung ob die Distanz zwischen den beiden virtuellen Hindernisgrenzen entweder längs der ersten Richtung oder in der zweiten Richtung senkrecht zur ersten Richtung geringer ist als eine zweite, vorgegebene Distanz, und ob die Projektionen der Grenzen längs einer Richtung, die nicht die für die Berechnung der Distanz benutzt wurde, eine überlappende Fläche aufweisen;
wenn die Distanz geringer ist als die zweite vorgegebene Distanz, und wenn eine überlappende Fläch vorhanden ist,
wird irgendeine der mehr als zwei Hindernisgrenzen gewählt, um gelöscht zu werden.

6. Die Methode gemäss Anspruch 5, bei der, wenn die Distanz zwischen den beiden virtuellen Hindernisgrenzen geringer ist als die zweite vorgegebene Distanz, und wenn eine überlappende Fläche vorhanden ist,
umfasst die Auswahl irgendeiner der mehr als zwei virtuellen Hindernisgrenzen, die gelöscht werden soll, Folgendes: Löschen einer virtuellen Hindernisgrenze, die später definiert wird.

7. Die Methode gemäss Anspruch 6, bei der die Steuerung (S14) der Bewegungsbahnen des Roboters basierend auf der virtuellen Hindernisgrenze weiter Folgendes umfasst:
Wenn ein bedientes Feld und/oder zu bedienendes Feld in Kommunikation mit mindestens zwei Unterbereichen während des Bewegungsvorganges erkannt wird, Löschen der virtuellen Hindernisgrenze, wobei ein Feld, das vom Roboter durchquert wird, als ein bedientes Feld markiert wird.

8. Die Methode gemäss Anspruch 1, wobei, vor dem Erhalt (S11) der Positionsinformation der beiden an beiden Seiten des Roboters längs der Bewegungsrichtung des Roboters benachbarten oder der in senkrechter Richtung zur Bewegungsrichtung lokalisierten Hindernisse und Berechnung der Distanz zwischen den beiden benachbarten Hindernissen, die Methode weiter Folgendes umfasst:
Erhalt einer virtuellen Karte des zu bedienenden Bereichs für den Roboter, wobei die virtuelle Karte in die Felder in einer Anordnung aufgeteilt ist; und
während eines Vorgangs, bei dem sich der Roboter längs der Bewegungsrichtung und in der Richtung senkrecht zur der Bewegungsrichtung bewegt, Erkennen des Zustandes von Feldern die an das vom Roboter lokalisierte Feld angrenzen, und Markierung des Zustandes der Felder auf der virtuellen Karte, wobei ein mit einem Hindernis versehenes, erkanntes Feld als ein Hindernisfeld markiert wird.

9. Die Methode gemäss Anspruch 8, bei dem der Erhalt (S11) der Positionsinformation der beiden an beiden Seiten des Roboters längs der Bewegungsrichtung des Roboters benachbarten Hindernisse oder der Richtung senkrecht zur Bewegungsrichtung und die Berechnung der Distanz zwischen den beiden benachbarten Hindernissen Folgendes umfasst:
Erhalt der beiden benachbarten, an beiden Seiten des Roboterrs lokalisierten Hindernisfelder längs der Bewegungsrichtung oder der Richtung senkrecht zur Bewegungsrichtung und Berechnung der Distanz zwischen den beiden benachbarten Hindernisfeldern basierend auf Positionsinformation der beiden benachbarten Hindernisfelder auf der virtuellen Karte.

10. Die Methode gemäss Anspruch 9, bei der die Bestimmung (S12), ob die Distanz zwischen den beiden benachbarten Hindernissen geringer ist als oder gleich der ersten, vorgegebenen Distanz, weiter die Bestimmung umfasst, ob das zu bedienende Feld mindestens an eine Seite eines Feldes zwischen den beiden benachbarten Feldern angrenzend lokalisiert ist und mit dem unbekannten Feld kommuniziert;
die Definition (13) der virtuellen Hindernisgrenze zwischen den beiden benachbarten Hindernissen, wenn die Distanz zwischen den beiden benachbarten Hindernissen geringer ist als oder gleich der ersten vorgegebenen Distanz, Folgendes umfasst:
Wenn die Distanz zwischen den beiden benachbarten Hindernisfeldern geringer ist als oder gleich der ersten, vorgegebenen Distanz und das zu bedienende Feld an mindestens einer Seite eines Feldes zwischen den beiden benachbarten Feldern anliegend lokalisiert ist und mit dem unbekannten Feld kommuniziert, wird die virtuelle Hidnernisgrenze zwiscen den beiden benachbarten Hindernisgrenzen definiert.

11. Ein Roboter, der Folgendes umfasst:
Einen Sensor (701); und
einen Prozessor (702), der mit dem Sensor (701) verbunden ist, wobei der Sensor (701) und der Prozessor (702) konfiguriert sind, um ein oder mehrere Programme auszuführen einschliesslich der Anweisungen für die Ausführung der Methode gemäss irgendeinem der Ansprüche 1-10.

## Revendications

1. Une méthode de contrôle du déplacement d'un robot sur une zone à opérer, celle-ci étant divisée en plusieurs carrés, comprenant les pas suivants:
obtenir (S11) l'information de position de deux obstacles adjacents situés sur les deux côtés du robot le long d'une direction de déplacement du robot ou d'une direction perpendiculaire à cette direction de déplacement, et calculer la distance entre les deux obstacles adjacents;
déterminer (S12) si la distance entre les deux obstacles adjacents est inférieure ou égale à une première distance prédéfinie ;
définir (S13) une limite d'obstacle virtuel entre les deux obstacles adjacents lorsque la distance entre ceux-ci est inférieure ou égale à la première distance prédéfinie; et
contrôler (S14) les trajectoires de déplacement du robot sur la base de la limite d'obstacle virtuel;
où le contrôle (S14) des trajectoires de déplacement du robot sur la base de la limite d'obstacle virtuel comprend les pas suivants:
diviser la zone à opérer en deux sous-zones au minimum en utilisant la limite d'obstacle virtuel; et
contrôler le robot pour franchir les carrés à opérer et les carrés inconnus au sein de l'une des deux sous-zones au minimum, et éliminer la limite d'obstacle virtuel; et contrôler le robot pour franchir les carrés à opérer et les carrés inconnus de l'autre des deux sous-zones au minimum;
où, si l'on détecte qu'un carré est libre d'obstacles et il n'a pas été franchi par le robot, il est marqué comme carré à opérer; et si un carré, qui n'est pas franchi par le robot et a un statut de non détecté, il est marqué comme carré inconnu.

2. La méthode conformément à la revendication 1, où l'opération d'obtention (S11) d'information de position des deux obstacles adjacents, situés sur les deux côtés du robot le long de la direction de déplacement ou de la direction perpendiculaire à la direction de déplacement, comprend les pas suivants:
le long de la direction de déplacement du robot ou de la direction perpendiculaire à la direction de déplacement, obtenir l'information de position d'un premier obstacle situé sur un côté du robot et l'information de position d'un deuxième obstacle situé sur l'autre côté du robot, où les zones entre le premier et le deuxième obstacle sont libres d'obstacles.

3. La méthode conformément à la revendication 1, où le contrôle (S14) des trajectoires de déplacement du robot sur la base de la limite d'obstacle virtuel comprend les pas suivants:
lorsque le robot se déplace ensuite jusqu'à atteindre la limite d'obstacle virtuel, définir un obstacle virtuel à situer sur la limite d'obstacle virtuel; et contrôler les trajectoires de déplacement du robot pour éviter qu'il franchisse la limite d'obstacle virtuel jusqu'à ce que celle-ci soit éliminée.

4. La méthode conformément à la revendication 3, où l'opération de définir (S13) la limite d'obstacle virtuel entre les deux obstacles adjacents, lorsque la distance entre les deux obstacles adjacents est inférieure ou égale à la première distance prédéfinie, comprend les pas suivants: contrôler le robot pour qu'il continue à se déplacer en dehors des carrés entre les deux obstacles adjacents, et ensuite la limite d'obstacle virtuel est définie entre les deux obstacles adjacents.

5. La méthode conformément à la revendication 3, où l'opération de définir (S13) la limite d'obstacle virtuel entre les deux obstacles adjacents, lorsque la distance entre ceux-ci est inférieure ou égale à la première distance prédéfinie, comprend en outre les pas suivants:
quand on définit plus de deux limites d'obstacles virtuels, déterminer si la distance entre les deux limites d'obstacles virtuels, le long de l'une quelconque de la première direction ou de la deuxième direction perpendiculaire à la première direction, est inférieure ou égale à la deuxième distance prédéfinie, et déterminer si les projections des limites le long d'une direction différente de celle utilisée pour calculer la distance ont une zone de chevauchement;
quand la distance est inférieure à la deuxième distance prédéfinie et, lorsqu'il existe une zone de chevauchement, on sélectionne l'une quelconque des plus des deux limites d'obstacles virtuels en vue de l'éliminer.

6. La méthode conformément à la revendication 5, où, lorsque la distance entre les deux limites d'obstacles virtuels est inférieure à la deuxième distance prédéfinie et, lorsqu'il existe une zone de chevauchement, l'opération de sélection de l'une quelconque des plus des deux limites d'obstacles virtuels en vue de l'élimination comprend le pas suivant:
éliminer une limite d'obstacle virtuel, qui est définie ultérieurement.

7. La méthode conformément à la revendication 6, où l'opération de contrôle (S14) des trajectoires de déplacement du robot, sur la base de la limite d'obstacle virtuel, comprend les pas suivants:
au cours du déplacement, lorsque l'on détecte qu'un carré opéré et/ou un carré à opérer communique avec au moins deux sous-zones, éliminer la limite d'obstacle virtuel, où un carré, qui est franchi par le robot, est marqué comme carré opéré.

8. La méthode conformément à la revendication 1, où, avant d'obtenir (S11) l'information de position des deux obstacles adjacents situés sur les deux côtés du robot le long de la direction de déplacement ou de la direction perpendiculaire à celle-ci, et de calculer la distance entre les deux obstacles adjacents, la méthode comprend en outre les pas suivants:
obtenir une carte virtuelle de la zone à opérer pour le robot, où la carte virtuelle est divisée en carrés sur un déploiement; et
au cours du déplacement du robot, le long de la direction de déplacement et de la direction perpendiculaire à celle-ci, détecter le statut des carrés, qui sont adjacents au carré où le robot est situé, et marquer le statut des carrés sur la carte virtuelle, où lorsque l'on détecte qu'un carré a un obstacle, il est marqué comme carré à obstacle.

9. La méthode conformément à la revendication 8, où l'obtention (S11) de l'information de position des deux obstacles adjacents situés sur les deux côtés du robot le long de la direction de déplacement ou de la direction perpendiculaire à celle-ci, et le calcul de la distance entre les deux obstacles adjacents comprennent les pas suivants:
le long de la direction de déplacement ou de la direction perpendiculaire à celle-ci, obtenir l'information des deux carrés à obstacles adjacents situés sur les deux côtés du robot, et calculer la distance entre les deux carrés à obstacles adjacents, sur la base de l'information de position des deux carrés à obstacles adjacents sur la carte virtuelle.

10. La méthode conformément à la revendication 9, où l'opération de déterminer (S12) si la distance entre les deux obstacles adjacents est inférieure ou égale à la première distance prédéfinie, comprend le pas suivant: déterminer si le carré à opérer est situé de manière adjacente à au moins un côté d'un carré entre les deux carrés adjacents et s'il communique avec le carré inconnu;
l'opération de définir (S13) la limite d'obstacle virtuel entre les deux obstacles adjacents, lorsque la distance entre les deux obstacles adjacents est inférieure ou égale à la première distance prédéfinie, comprend les pas suivants:
quand la distance entre les deux obstacles adjacents est inférieure ou égale à la première distance prédéfinie, et le carré à opérer est situé de manière adjacente à au moins un côte d'un carré entre les deux carrés adjacents et il communique avec le carré inconnu, la limite d'obstacle virtuel est définie ente les deux limites d'obstacle adjacentes.

11. Un robot comprenant les éléments suivants:
un capteur (701) ; et
un processeur (702) relié au capteur (701), où:
le capteur (701) et le processeur (702) sont configurés de manière à exécuter un ou plusieurs programmes comprenant des instructions pour mettre en place la méthode de l'une quelconque des revendications 1 à 10.
